# EUROPEAN PATENT APPLICATION

(11) **EP 3 588 895 A1**
(43) Date of publication of application: **01.01.2020**
(21) Application number: 18180686.0
(22) Date of filing: 29.06.2018
(51) Int. Cl.: H04L 29/06, H04W 88/16, H04W 76/12

(54) **OPTIMISING TRAFFIC FLOWS**

(71) Applicant: Nokia Solutions and Networks Oy, 02610 Espoo (FI)
(72) Inventor: KUCERA, Stepan, Dublin 15 (IE); FAHMI, Kariem, Dublin 15 (IE)
(74) Representative: Bryers LLP

(57) **Abstract**

In examples, a method for optimising an encrypted traffic flow between user equipment and a content server, the method comprises authenticating a proxy system of the user equipment using a counterpart secure proxy apparatus, redirecting a request for encrypted content from an application of the user equipment to the counterpart secure proxy apparatus via the proxy system, establishing a trusted communication session between the counterpart secure proxy apparatus and the application, and optimising uplink and downlink traffic between the application and the content server using the proxy system and the counterpart secure proxy apparatus respectively.

## Description

### TECHNICAL FIELD

Aspects relate, in general, to methods and systems for optimising an encrypted traffic flow between user equipment and a content server

### BACKGROUND

Traffic encryption using Transport Layer Security (TLS) protocols (also known as Secure Sockets Layer, SSL) can be used to provide authenticated and secure communications between a client application and a remote content server.

However, data encryption prevents network operators from implementing advanced traffic optimization, such as that used in high-performance networks, such as 5G networks for example.

### SUMMARY

According to an example, there is provided a method for optimising an encrypted traffic flow between user equipment and a content server, the method comprising authenticating a proxy system of the user equipment using a counterpart secure proxy apparatus, redirecting a request for encrypted content from an application of the user equipment to the counterpart secure proxy apparatus via the proxy system, establishing a trusted communication session between the counterpart secure proxy apparatus and the application, and optimising uplink and downlink traffic between the application and the content server using the proxy system and the counterpart secure proxy apparatus respectively. A secret encryption key can be exchanged between the proxy system of the user equipment and the counterpart secure proxy apparatus as part of an initialisation phase. The encryption key can be part of a symmetric key pair for example. A user-equipment-trusted certificate can be provided to user equipment from the counterpart secure proxy apparatus. The certificate can relate to a domain configured to fulfil the request for encrypted content for the application. A secure session key can be generated for the trusted communication session between the counterpart secure proxy apparatus and the application.

According to an example, there is provided an access gateway in a wireless communications network, the access gateway comprising an optimisation module to authenticate a user equipment proxy system, establish a trusted communication session between the access gateway and an application, forward a request for encrypted content from the application to a content server, and optimise, in response to the request, downlink traffic from the content server to the application. The optimisation module can provide a user-equipment-trusted certificate to user equipment between the access gateway and the user equipment proxy system. The optimisation module can deliver encrypted content from the content server to the application.

According to an example, there is provided a user equipment, comprising a proxy system to initiate an authentication process with an optimisation module of an access gateway, redirect a request for encrypted content from an application of the user equipment to the optimisation module of the access gateway, and optimise uplink traffic to the content server from the application. The proxy system can receive a user-equipment-trusted certificate from the optimisation module of the access gateway, between the user equipment and the access gateway. The proxy system can receive a secure session key from the optimisation module of the access gateway.

According to an example, there is provided a non-transitory machine-readable storage medium encoded with instructions executable by a processor for optimising an encrypted traffic flow between user equipment and a content server, the machine-readable storage medium comprising instructions to authenticate a proxy system of the user equipment using a counterpart secure proxy apparatus, redirect a request for encrypted content from an application of the user equipment to the counterpart secure proxy apparatus via the proxy system, establish a trusted communication session between the counterpart secure proxy apparatus and the application, and optimise uplink and downlink traffic between the application and the content server using the proxy system and the counterpart secure proxy apparatus respectively. Further instructions can be provided to execute a handshake between the user equipment and the counterpart secure proxy apparatus using a user-equipment-trusted certificate. Further instructions can be provided to optimise delivery of uplink content from a privileged application executing on the user equipment. Further instructions can be provided to exchange a secret encryption key between the proxy system of the user equipment and the counterpart secure proxy apparatus.

### BRIEF DESCRIPTION OF THE DRAWINGS

Embodiments will now be described, by way of example only, with reference to the accompanying drawings, in which:
Figure 1 is a schematic representation of a process flow in a method for optimising an encrypted traffic flow between user equipment and a content server according to an example;
Figure 2 is a schematic representation of a system for user equipment (UE) based multi-connectivity according to an example;
Figure 3 is a schematic representation of a residential gateway (RGW) according to an example;
Figure 4 shows an example of user equipment according to an example; and
Figure 5 shows an example of an access gateway comprising an optimisation module according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

According to an example, there is provide a method for optimization of encrypted communications without compromising authenticity or security. Examples of services optimised can include:
- Multi-path routing of different traffic types based on their content and Internet Service Provider (ISP) preferences to optimize user experience / network utilization (bandwidth, latency, reliability) as well as to achieve QoS constraints associated with content type (live video broadcast vs buffered video);
- Caching of user traffic to reduce network congestion;
- Personalization of content based on user profile inferred from browsing history and/or status;
- Latency-aware multipath scheduling with application-layer frame size awareness and Forward Error Correction provisioning for minimization of application layer latency;
- Transport-layer traffic filtering, ad blocking, anti-ad blocking, targeted advertisement; and
- Ultra-granular selective throttling of content based on ISP preference

In wide area networks such as the 5G networks, there is currently no viable solution to the problem of secure optimization of encrypted high-performance data delivery. Employing standard TLS proxies known from local area networks is characterized by major issues preventing any real-life deployment. For example, such remote TLS proxies do not allow handset users to selectively and on-demand decide what concrete application can use the optimization services offered by the proxy in a secure and transparent manner. This is major privacy as well as security problem as optimization services may involve access to clean-text data content.

In addition, remote TLS proxies can neither actively collaborate with the handset on the implementation of optimization objectives nor can they (at least passively) monitor a handset state (e.g., signal strength of handset wireless links) and exploit it for unilateral optimization. Furthermore, remote TLS proxies also cannot activate an optimization service on-demand and without user knowledge (approval) when the user or the handset application subscribes to the optimization service, that is, after the handset has been purchased by the user and the optimized application installed.

According to an example, there is provided a method for the efficient and secure application-specific optimization of encrypted traffic. Since no user equipment (e.g. handset) modifications are implemented, any legacy (as well as future) handsets are supported.

In an example, a proxy system of user equipment can be (pre)-provided by the manufacturer, network operator or the user. For example, the proxy system can be included as part of an application that is used by subscribers for accessing and optimizing, for example, a Wi-Fi network provided by a network operator. Another example consists in the usage of a Virtual Private Network (VPN) framework. For example, the system can be included in a multi-connectivity solution that enables faster data delivery over multiple wireless link in parallel by using user-space in unmodified handsets.

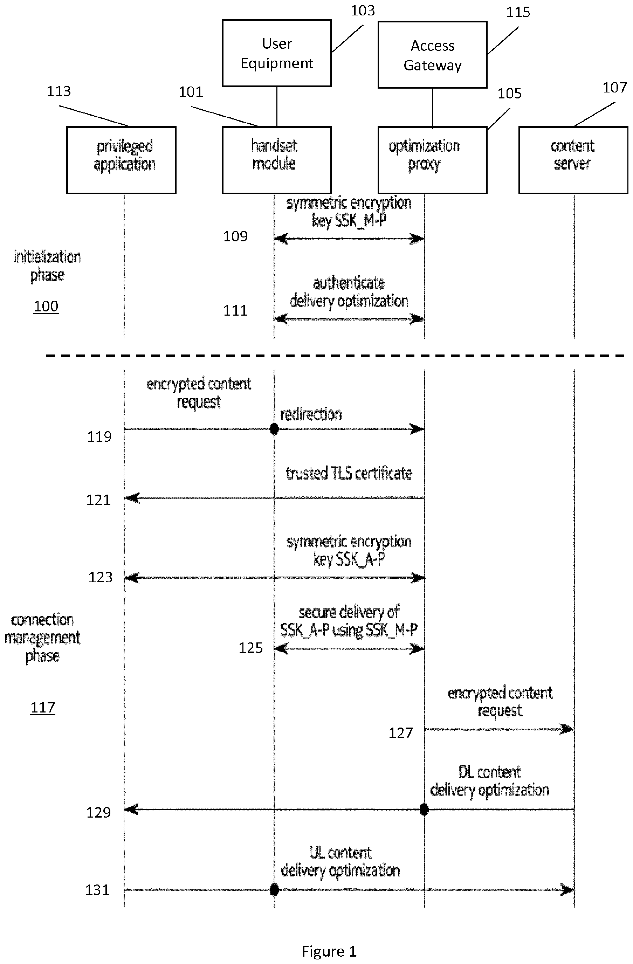

Figure 1 is a schematic representation of a process flow in a method for optimising an encrypted traffic flow between user equipment and a content server according to an example. User equipment can include a handset, such as a mobile device handset for example. In an initialisation phase 100, a proxy system 101 of user equipment 103 initiates a handshake, such as a TLS handshake for example, with counterpart secure proxy apparatus (or optimisation module) 105. The handshake can be initiated once or periodically (in either case, per session for example). The optimization module 105 can be provided as part of a content server 107 or can be a standalone apparatus. During the handshake process in the initialization phase 100, a symmetric session key 109 ($SSK_M-P$) is set up for parallel secure communications between the proxy system 101 and the optimization module 105. In an example, the symmetric session key 109 is used authenticate 111 an application service optimization at the optimization module 105 (e.g., based on SIM-based/SMS-delivered credentials). For example, an application of the user equipment 103 can become a privileged application 113 when authenticated at the optimization module 105.

In a connection management phase 117, the privileged application 113 that is eligible for an optimied service (e.g., 5G QoS-aware multi-path data delivery) requests encrypted (e.g., TLS-encrypted) content 119 from a remote content server 107 (e.g., a video stream from "http://www.server.com/video.html"). In an example, this can be a re-occurring event. The proxy system 101 of the user equipment 103 transparently forwards (e.g., redirects) the content request 119 to the service optimization module 105. In an example, the optimization module 105 can be an aggregation proxy in a 5G converged core.

The optimization module 105 completes the handshake by presenting a handset-trusted certificate 121 for the requested server domain (e.g., signed certificate for "www.server.com"), and setting up a symmetric session key 123 ($SSK_A-P$) for secure communications with the client application 113. In an example, the optimization module 105 can then securely deliver 125 the key $SSK_A-P$ to the proxy system 101 using encryption based on the key $SSK_M-P$. A dedicated encrypted connection can then be opened to the remote content server 107 for actual content delivery.

According to an example, upon the reception of downlink application data, the optimization module 105 can perform delivery optimization based on the possession of the key $SSK_A-P$, and securely forward unmodified encrypted content data to the application 113. In the uplink case, optimization based on the possession of the key $SSK_A-P$ can be performed at the proxy system 101 before being securely forward to the content server 107.

In the example of figure 1, the request 119 is transmitted or forwarded 127 to the content server 107, thereby resulting in delivery of content 129 to the application 113 via the optimisation module 105. In the uplink 131, data is passed to the content server 107 via the proxy system 101.

The examples below, described with reference to figure 1-3, relate to a privileged subscriber-critical application (e.g., a productivity tool) that is selectively supported with QoS-optimized multi-path data delivery by, for example, a 5G network operator. The multi-path service ensures that the application data is delivered over 5G New Radio and Wi-Fi wireless links in parallel whereby application video frames, for example, are scheduled over the two links such that their delivery latency is minimized. In an example, no other application installed in the user handset is permitted to use this service.

Other examples of data delivery optimization could be capacity and latency prediction as well as data pattern analysis and forecasting, both for optimized QoS-aware resource network allocation; personalization and contextualization functions in personalized search engines trained by specific HTTP GET requests; ad-blocker filters capable of isolating "junk" flows carrying non-critical data such as ads as well as offloading them from high-performance 5G resources to best-effort Wi-Fi links.

Both multi-connectivity architectures as described below assume that, adopting a downlink perspective, a data flow is sent from the application content server 107 to a hybrid access gateway 115 (HAG) which then forwards the flow over one or multiple parallel links. They differ however in where the flow re-assembly happens.

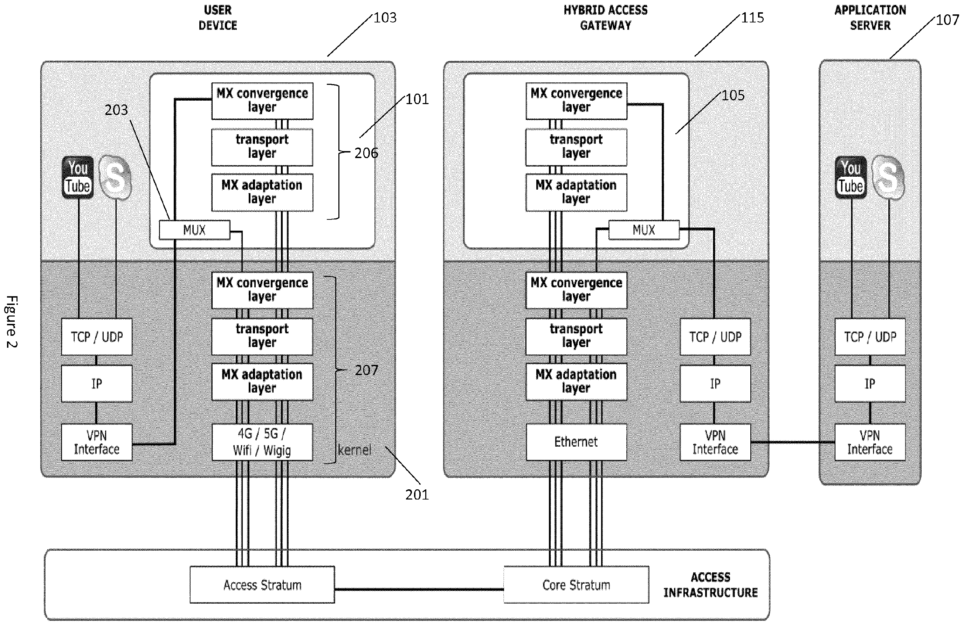

Figure 2 is a schematic representation of a system for user equipment (UE) based multi-connectivity according to an example, in which data subflows are delivered directly to the user equipment. For example, the subflows can be delivered over e.g. 5G and Wi-Fi, where they are aggregated.

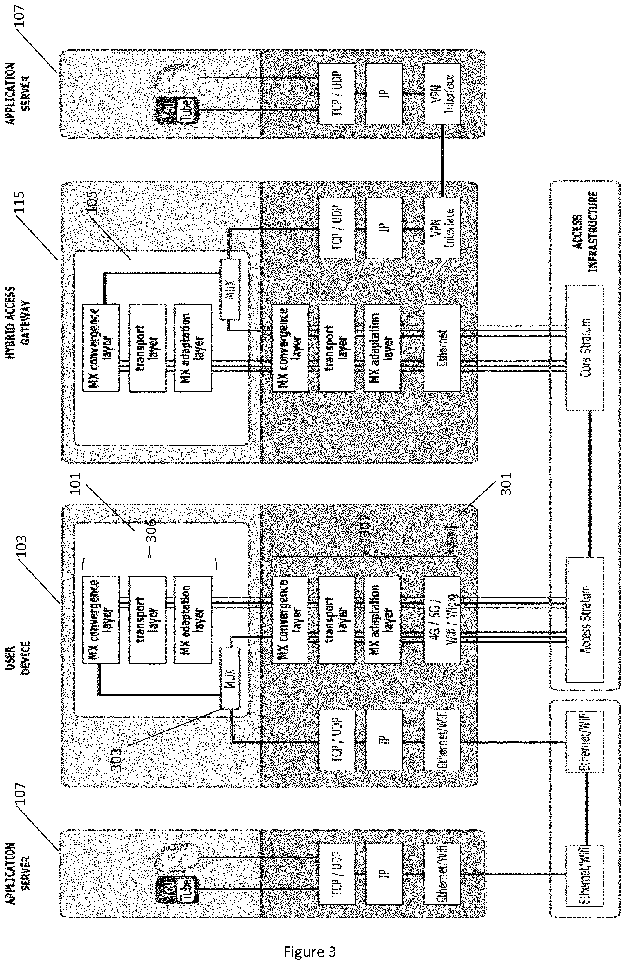

Figure 3 is a schematic representation of a residential gateway (RGW) according to an example. The gateway can receive multi-path traffic over DSL and 5G, perform seamless flow re-assembly and forward the resulting data flow to the user equipment over a single-technology radio access (e.g., Wi-Fi).
In either case as depicted in figure 2 or 3, flow re-assembly can occur in the kernel space (201, 301) of the UE operating system and/or in the user-space module 101 of the UE operating system. According to an example, re-assembly can be structured into:
- multi-access (MX) convergence layer - This layer performs multi-access specific tasks, e.g., access (path) selection, multi-link (path) aggregation, splitting/reordering, lossless switching, fragmentation, concatenation, keep-alive, and probing etc.
- transport layer - This layer performs basic data payload encapsulation.
- multi-access (MX) adaptation layer - This layer performs functions to handle asymmetric routing, tunneling, network layer security, and NAT etc.

In both figures 2 and 3, it is generally assumed that a UE operating system (OS) comprises a multi-connectivity capable kernel 201, 301 as well as a multi-connectivity capable user-space module 101. The kernel functions provide basic standardized features (e.g., MPTCP multi-connectivity for TCP-based applications) whereas the user-space module can enable advanced proprietary multi-connectivity features (e.g., application module for multi-path UDP support, MPTCP with asymmetric routing, or protocol for explicit latency control subject to predefined data delivery deadlines).

In an example, a user-space module 101 can be pre-installed by a network operator in the UE, or downloaded from an App Store and installed by a user for example. In an example, the module can use a standard framework for virtual private networks (VPN) to redirect all uplink (UL) application data flows based on single-path TCP or UDP via a virtual interface into a flow multiplexer (MUX) 203, 303. The multiplexer can be implemented on basis of the Layer Two Tunneling Protocol (L2TP) for example.

In an example, the redirection of application data to the proxy system 101 can be alternatively implemented by intercepting applications system calls for kernel networking services. To this end, either the application code can be modified after its activation (e.g., applications are loaded by so-called LD_preload module that links to a modified C library for SOCKET calls), or the application execution environment can be modified in user space (system call hooks can be injected into Android Dalvik/ART Virtual Machine by using the so-called Xposed framework or a similar JAVA method hooking mechanism) for example.

According to an example, after TCP/UDP payload extraction, a user-space MUX 203, 303 forwards the UL data to application content server by using either kernel-space networking stack (via dedicated Application Programming Interface) 207, 307, or user-space networking stack 206, 306. As shown in Fig. 2, both types of networking stack consist of three layers - multi-path (MX) convergence layer, transport layer, and MX adaptation layer. If the MX convergence layer is activated, multiple radio access technologies can be used in parallel to form concurrent data delivery links, e.g. over LTE and Wi-Fi. Similar considerations apply in the gateway of figures 2 and 3.

In an example, the user-space module can configure existing kernel protocols (e.g., MPTCP), modify the existing kernel protocols (e.g., loading a tailored congestion control module from the LTE SIM card), and implement new networking protocol stacks within the injected code base.

Examples in the present disclosure can be provided as methods, systems or machine-readable instructions. Such machine-readable instructions may be included on a computer readable storage medium. The storage medium can include one or multiple different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; optical media such as compact disks (CDs) or digital video disks (DVDs); or other types of storage devices.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a general-purpose computer, a special purpose computer, user equipment, an embedded processor or processors of other programmable data processing devices to realize the functions described in the description and diagrams. In particular, a processor or processing apparatus may execute the machine-readable instructions. Thus, modules of network devices or nodes may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode.

For example, the instructions may be provided on a non-transitory computer readable storage medium encoded with instructions, executable by a processor.

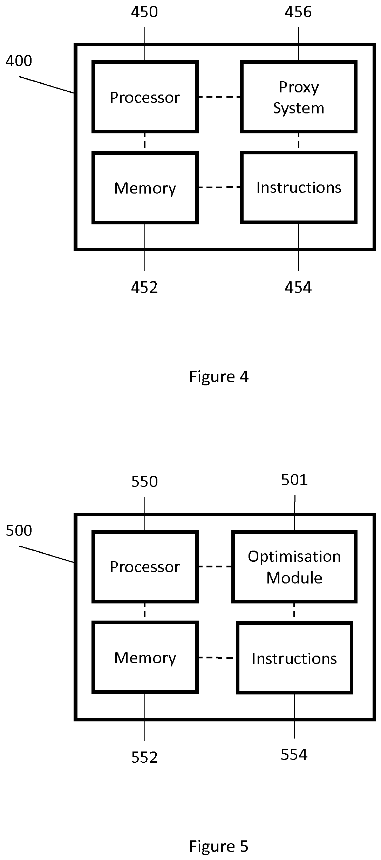

Figure 4 shows an example of user equipment 400 comprising a processor 450 associated with a memory 452. The memory 452 comprises computer readable instructions 454 which are executable by the processor 450 to, at least, authenticate a proxy system 456, 101 of the user equipment using a counterpart secure proxy apparatus 501, 105, redirect a request for encrypted content from an application 113 of the user equipment to the counterpart secure proxy apparatus 501, 105 via the proxy system, establish a trusted communication session between the counterpart secure proxy apparatus and the application 113, and optimise uplink and downlink traffic between the application 113 and the content server 107 using the proxy system 456, 101 and the counterpart secure proxy apparatus 501, 105 respectively. Instructions can be provided to finalise a handshake between the user equipment 400, 103 and the counterpart secure proxy apparatus 501, 105 using a user-equipment-trusted certificate; optimise delivery of uplink content from a privileged application executing on the user equipment; and exchange a secret encryption key between the proxy system of the user equipment and the counterpart secure proxy apparatus.

Figure 5 shows an example of an access gateway 500 comprising an optimisation module 501, a processor 550 associated with a memory 552. The memory 552 comprises computer readable instructions 554 which are executable by the processor 550 to, at least, cause the optimisation module 554 to authenticate a user equipment proxy system 456, 101, establish a trusted communication session between the access gateway 500 and an application, forward a request for encrypted content from the application to a content server, and optimise, in response to the request, downlink traffic from the content server to the application. Instructions can be provided to provide a user-equipment-trusted certificate to user equipment whereby to finalise a handshake between the access gateway and the user equipment proxy system, and deliver unmodified encrypted content from the content server to the application.

Such machine-readable instructions may also be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

Further, the teachings herein may be implemented in the form of a computer software product, the computer software product being stored in a storage medium and comprising a plurality of instructions for making a computer device implement the methods recited in the examples of the present disclosure.

While the method, apparatus and related aspects have been described with reference to certain examples, various modifications, changes, omissions, and substitutions can be made without departing from the spirit of the present disclosure. In particular, a feature or block from one example may be combined with or substituted by a feature/block of another example.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method for optimising an encrypted traffic flow between user equipment and a content server, the method comprising:
authenticating a proxy system of the user equipment using a counterpart secure proxy apparatus;
redirecting a request for encrypted content from an application of the user equipment to the counterpart secure proxy apparatus via the proxy system;
establishing a trusted communication session between the counterpart secure proxy apparatus and the application; and
optimising uplink and downlink traffic between the application and the content server using the proxy system and the counterpart secure proxy apparatus respectively.

2. A method as claimed in claim 1, further comprising:
exchanging a secret encryption key between the proxy system of the user equipment and the counterpart secure proxy apparatus as part of an initialisation phase.

3. A method as claimed in claim 1 or 2, further comprising:
providing a user-equipment-trusted certificate to user equipment from the counterpart secure proxy apparatus.

4. A method as claimed in claim 3, wherein the certificate relates to a domain configured to fulfil the request for encrypted content for the application.

5. A method as claimed in any preceding claim, further comprising:
generating a secure session key for the trusted communication session between the counterpart secure proxy apparatus and the application.

6. An access gateway in a wireless communications network, the access gateway comprising an optimisation module to:
authenticate a user equipment proxy system;
establish a trusted communication session between the access gateway and an application;
forward a request for encrypted content from the application to a content server; and
optimise, in response to the request, downlink traffic from the content server to the application.

7. An access gateway as claimed in claim 6, the optimisation module further to:
provide a user-equipment-trusted certificate to user equipment between the access gateway and the user equipment proxy system.

8. An access gateway as claimed in claim 6 or 7, the optimisation module further to deliver encrypted content from the content server to the application.

9. User equipment, comprising a proxy system to:
initiate an authentication process with an optimisation module of an access gateway;
redirect a request for encrypted content from an application of the user equipment to the optimisation module of the access gateway; and
optimise uplink traffic to the content server from the application.

10. User equipment as claimed in claim 9, the proxy system further to:
receive a user-equipment-trusted certificate from the optimisation module of the access gateway, between the user equipment and the access gateway.

11. User equipment as claimed in claim 9 or 10, the proxy system further to:
receive a secure session key from the optimisation module of the access gateway.

12. A non-transitory machine-readable storage medium encoded with instructions executable by a processor for optimising an encrypted traffic flow between user equipment and a content server, the machine-readable storage medium comprising instructions to:
authenticate a proxy system of the user equipment using a counterpart secure proxy apparatus;
redirect a request for encrypted content from an application of the user equipment to the counterpart secure proxy apparatus via the proxy system;
establish a trusted communication session between the counterpart secure proxy apparatus and the application; and
optimise uplink and downlink traffic between the application and the content server using the proxy system and the counterpart secure proxy apparatus respectively.

13. A non-transitory machine-readable storage medium as claimed in claim 12, comprising further instructions to:
execute a handshake between the user equipment and the counterpart secure proxy apparatus using a user-equipment-trusted certificate.

14. A non-transitory machine-readable storage medium as claimed in claim 12 or 13, comprising further instructions to:
optimise delivery of uplink content from a privileged application executing on the user equipment.

15. A non-transitory machine-readable storage medium as claimed in any of claims 12 to 14, comprising further instructions to:
exchange a secret encryption key between the proxy system of the user equipment and the counterpart secure proxy apparatus.
